# EUROPÄISCHE PATENTSCHRIFT

(11) **EP 0 397 908 B1**
(45) Veröffentlichungstag und Bekanntmachung des Hinweises auf die Patenterteilung: **07.12.1994**
(21) Anmeldenummer: 89109041.7
(22) Anmeldetag: 19.05.1989
(51) Int. Cl.: H04M 11/08, G06F 9/445, G06F 15/16

(54) **Verfahren zur bestimmungsgemässen Programmierung eines Bildschirmtextgerätes**
Specification consistent videotext apparatus programming method
Méthode de programmation d'un appareil vidéotexte conformément à son application

(43) Veröffentlichungstag der Anmeldung: 22.11.1990
(73) Patentinhaber: LOEWE OPTA GMBH, 96305 Kronach (DE)
(72) Erfinder: Missbach, Hilmar, Prof. Dipl.-Ing., D-8640 Kronach (DE); Quappe, Jürgen, Dipl.-Ing., D-8743 Küps-Schmölz (DE)

(56) Entgegenhaltungen:
- EP-A- 0 113 022
- EP-A- 0 241 678
- FUNKSCHAU, Band 59, Nr.20, 25. September 1987, Seiten 43-47, München, DE: "Btx, Fernseh- und Kabeltext unter einem Hut"
- MINI-MICRO CONFERENCE RECORD, Teil 9/1, 8.-11. November 1983, Seiten 1-9; Gerhard R. HERBEL: "Implementation considerations for NAPLPS VIDEOTEX"

## Beschreibung

Die Erfindung betrifft ein Verfahren zur bestimmungsgemäßen Programmierung eines Bildschirmtextgerätes nach dem Oberbegriff des Anspruchs 1.

Ein Bildschirmtext-Terminal, wie es dem Verfahren zugrunde liegt, ist z.B. aus der DE-OS 36 23 572 bekannt, das einen ladbaren Programmspeicher aufweist, in den über eine Kommunikationsschnittstelle aus einem externen Datenspeichergerät aktuelle Arbeitsprogramme einspeicherbar sind. Das externe Datenspeichergerät kann zugleich auch als Datensicherungsspeicher für die empfangenen oder editierten Bildschirmtextseiten eingesetzt werden, wobei die Daten über die Datenkommunikationsschnittstelle ebenfalls ausgegeben und in dem externen Datenspeicher abgelegt werden können. Nach diesem Stand der Technik ist es aber auch möglich, von dem Mikroprozessor des BTX-Decoders direkt auf den Programmspeicher des externen Datenspeichergerätes oder auf den Massenspeicher über den in dem Datenspeichergerät vorhandenen Mikroprozessor zuzugreifen. Die beiden Prozessoren kommunizieren dabei miteinander nach bekannten Verfahren.

Aus der DE-OS 36 05 421 ist z.B. ein solches Verfahren zum Datenaustausch zwischen einem ersten und einem zweiten Prozessor bekannt. Die beiden miteinander kommunizierenden Prozessoren sind über drei Leitungen miteinander verbunden. Der jeweils sendebereite Prozessor zeigt die Aussendung von Daten auf einer ihm zugeordneten Leitung an. Der jeweils empfangsbereite Prozessor beantwortet die Anzeige des sendebereiten Prozessors, der wiederum die Antwort des empfangsbereiten Prozessors quittiert. Der Empfang der Quittung des sendebereiten Prozessors wird vom empfangsbereiten Prozessor an den sendebereiten Prozessor gemeldet, der auf diese Meldung hin mit der Aussendung von Daten beginnt. Um den Fall, daß beide Prozessoren gleichzeitig senden wollen, auszuschließen, fragt einer der beiden Prozessoren zweimal die dem anderen Prozessor zugeordnete Leitung ab. Nur wenn der eine Prozessor bei beiden Abfragen feststellt, daß der andere Prozessor nicht senden will, beginnt er mit der Aussendung von Daten, anderenfalls geht er in die Empfangsbereitschaft. Es handelt sich mithin um eine bestimmte Busstruktur und ein Verfahren, das die Kommunikation zwischen den beiden Prozessoren ermöglicht.

In bezug auf die angesprochenen Massen- und Individualkommunikationsendgeräte besteht die Forderung, daß diese für die Abarbeitung verschiedener Dienste und für den Empfang unterschiedlicher Signale geeignet sein sollen. So wird z.B. bei reinen Bildschirmtext-Terminals verlangt, daß diese sowohl den CEPT-Standard als auch Prestel, Antiope und andere definierte Bildschirmtext-Standards abarbeiten können. Weiterhin soll auch ein Telexverkehr über ein solches Terminal möglich sein. Ferner besteht die Forderung, daß derartige Terminals weltweit eingesetzt werden können, d.h. sie sind mit nationalen Zeichensatzgeneratoren auszustatten, um die Darstellung der Zeichen und der Benutzeroberfläche in der jeweiligen Landessprache zu ermöglichen.

Bezogen auf Fernsehempfangsgeräte mit Bildschirmtextdecodern bestehen die gleichen Anforderungen teilweise gepaart mit Telefonkomfortschaltungen, letzteres gilt auch für die beschriebenen BTX-Terminals. Derartige Fernsehempfangsgeräte werden europa- und weltweit eingesetzt. Als Beispiel sei angeführt, daß z.B. die Kanalbelegungen der einzelnen Sender in München völlig andere sind als in London oder Paris. Ebenso besteht vermehrt die Anforderung, daß über ein Fernsehempfangsgerät oder ein Bildschirmtext-Teminal allgemeiner Art anschließbare Peripheriegeräte, wie Videoplattenspeicher und Videoaufzeichnungs- oder Tonaufzeichnungsgeräte usw., mit angesteuert werden können, wozu entsprechende Steuerprogramme und Bedienerführungen zu implementieren sind. Die Liste der Anforderungen an universell einsetzbare Multistandard- und multifunktionale Terminals dieser Art ließe sich beliebig erweitern. Nach dem gegenwärtigen Technologiestand ist immer nur eine individuelle Anpassung der Hard- und Software eines solchen Gerätes möglich.

Aus der EP A3 0 113 022 ist ein Bildschirmtextsystem mit öffentlichen Endgeräten bekannt, mit denen Informationen über ein Fernmeldenetz aus einer Bildschirmtextzentrale und einer daran angeschlossenen zentralen Editiereinrichtung abgerufen und in Form von Bildschirmtextseiten auf dem Bildschirm eines öffentlichen Endgerätes dargestellt werden können. Das öffentliche Endgerät weist einen Schreib/Lese-Speicher auf, in dem Informationen von der Btx-Zentrale kommend abgespeichert sind, die als Offline-Bildschirmtextseiten auf dem Bildschirm dargestellt werden können. Die darin abgelegten Seiten können im Offline-Betrieb des öffentlichen Endgerätes aus dem Speicher abgerufen und zur Anzeige gebracht werden. Die Bildschirmtextseiten werden von einem externen Rechner über die Bildschirmtextzentrale und das öffentliche Telefonnetz nach Abruf oder automatisch gespeichert. Der externe Rechner ist dabei mit einem Editiergerät zur Generierung der Seiten gekoppelt. Darüber hinaus bietet das bekannte System unter Verwendung von Offline-Bildschirmtextseiten und einem Diagnoseprogramm die Nutzung der zentralen Einrichtung zur Service- und Wartungsunterstützung. Die Ergebnisse der Test- und Diagnoseprogramme können dabei auf dem Bildschirm des öffentlichen Endgerätes direkt und/oder über die Btx-Zentrale an die zentrale Einrichtung übertragen werden.

Die zentrale Einrichtung bietet darüber hinaus die Möglichkeit, Programme und Daten praktisch unbegrenzt zentral zu speichern, während in dem Terminal nur etwa 20 Bildschirmtextseiten und eine beschränkte Anzahl sonstiger Daten gespeichert werden können. Die interne Speicherkapazität des Endgerätes wird dadurch optimal genutzt. Die Testsoftware im Endgerät kann bedienungsfreundlich ausgeführt werden und ermöglicht dadurch einen komfortablen Dialogbetrieb mit Hilfe des vorhandenen Bildschirms.

Um die erforderlichen Funktionen - Anwählen der Btx-Zentrale, Auswahl der gewünschten Bildseiten, Interpretation der Daten, Abspeichern und Ausgeben der Informationen über den Bildschirm - ausführen zu können, benötigt die Steuerung entsprechende Programme, z.B. ein Offline-Generierungsprogramm. Darüber hinaus besteht die Möglichkeit, daß die Offline-Seiten auch automatisch von der zentralen Einrichtung über die Bildschirmtextzentrale an die öffentlichen Endgeräte übertragen werden.

Das öffentliche Bildschirmtextterminal bleibt in jedem Fall immer ein Bildschirmtextendgerät und kann für andere Anwendungen nicht eingesetzt werden. Die Integration eines solchen Bildschirmtextgerätes in ein anderes Gerätesystem, z.B. in einen Farbfernsehempfänger, um über den Bildschirmtextgeräteteil die Funktionen des Fernsehgerätes zu steuern, und zwar in Abhängigkeit von Programmen, die von einer Zentrale abrufbar sind, ist ebenfalls nicht angeregt. Außerdem gestattet der Stand der Technik nur den Zugriff auf eine bestimmte zentrale Einrichtung (externer Rechner) mit Editierplatz und damit nur die Auswertung der Offline-Informationen, die von dieser bestimmten Zentrale angeboten werden. Eine universelle Nutzung der Programmangebote verschiedener Zentralen ist nicht vorgesehen. Das bekannte System ist also nicht universell einsetzbar.

Ausgehend von diesem Stand der Technik liegt der Erfindung die Aufgabe zugrunde, ein Verfahren zu entwickeln, das die universelle Nutzung derartiger Bildschirmtextgeräte ermöglicht, ohne daß Hardwareänderungen an dem Gerät notwendig sind, wobei die Aktivierung für die jeweiligen Dienste und Anpassungen an die Landessprachen und Einsatzbedingungen am Ort des Einsatzes selbst möglich sein soll.

Die Aufgabe wird nach der Erfindung durch die im Patentanspruch 1 angegebenen Verfahrensschritte gelöst.

Über den als Kommunikationsprozessor eingesetzten Bildschirmtextdecoder ist es nach der Erfindung möglich, das Gerät am Einsatzort individuell angepaßt zu aktivieren. Dabei bedient sich das System entweder fernladbarer Betriebs- und Benutzersoftware oder von einem Datenträger abrufbarer Software, die direkt über eine entsprechende Schnittstelle in ein externes Datenspeichergerät eingespielt wird. Die Aktivierung wird bei der Erstinbetriebnahme oder bei Wechsel des bestimmungsgemäßen Einsatzes vorgenommen, wobei den gerätespezifischen Eigenschaften dadurch Rechnung getragen wird, daß diese in einer Bildschirmtextinformationsseite festgehalten und bei Auslieferung des Gerätes als Bestandteil mitgeliefert und in einem ROM, EPROM oder EEPROM abgelegt sind. Unter Beachtung der verfahrenswichtigen Identifikationsmerkmale
a) Speicherkapazität des zweiten Programmspeichers
b) interne und externe Schnittstellen
c) Funktionalitätsmerkmale des Gerätes

wird nach der Abrufprozedur gemäß den Merkmalen 3 bis 6 im Anspruch 1 das entsprechende Programm, das von der Programmquelle bereitgestellt ist, geladen.

Es ist ersichtlich, daß das angegebene Verfahren ein Massen- und Individualkommunikationsendgerät mit der im Oberbegriff angegebenen Struktur am Ort des Einsatzes zu aktivieren, gestattet, derart, daß es den jeweiligen Dienst unter Beachtung der nationalen Sprachen abzuarbeiten vermag. Die hierfür benötigten Programmpakete können z.B. in externen Rechnern der BTX-Anbieter bereitgestellt werden. Die Programmpakete müssen jedoch die Kategorieanforderungen erfüllen.

Bei Anwendung dieses Verfahrens in einem Fernsehempfangsgerät mit mehreren Prozessoren, wie sie z.B. in den Ansprüchen 4 und 5 angegeben sind, ist es möglich, ein Fernsehempfangsgerät ohne jegliche Kanalbelegung und schnittstellenunterstützende Software an jedem nationalen Einsatzort den aktuellen Einsatzbedingungen anzupassen und mit einer Benutzeroberfläche in den jeweiligen Landessprachen zu versehen. Wird z.B. das Fernsehempfangsgerät in London aufgestellt, so kann durch Anwahl einer Programmquelle über den Kommunikationsprozessor fernladbar oder durch ein angeschlossenes externes Datengerät eine Betriebssoftware eingespielt werden, die den unmittelbaren Zugriff auf die einzelnen empfangbaren Kanäle und deren Plazierung auf der Fernbedienung oder einen anderen Abruftastatur ermöglicht. Werden darüber hinaus in demselben Gerät Telefonkomfortschaltungen verwendet, so kann eine Anpassung an die Besonderheiten des nationalen Netzes ebenfalls durch Übernahme einer entsprechenden Betriebssoftware erfolgen. Die Benutzeroberfläche ist darüber hinaus der jeweiligen Landessprache, im dargestellten Beispiel "Englisch", anpaßbar.

Wird ein gleiches Gerät hingegen in Paris, Berlin oder München aufgestellt, so ist eine gleichartige individuelle Anpassung unter Beachtung der jeweiligen nationalen Sprache möglich, ohne daß am Gerät selbst Hardwareänderungen vorgenommen werden müssen. Wird ein Bildschirmtext-Terminal als Büro-Terminal eingesetzt, so ist eine Anpassung an den nationalen Standard auf einfache Weise möglich. Für die unterschiedlichen Standards, wie CEPT, Antiope oder Prestel, muß lediglich die entsprechende Betriebssoftware abgerufen werden, ebenso die dazugehörige Benutzeroberfläche in der jeweiligen Landessprache. Bei entsprechender Auslegung der Eingabetastatur können die Tastenbelegungen den Landesnormen angepaßt und eventuell auch auf dem Bildschirm dargestellt werden, um ein leichteres Editieren zu ermöglichen.

Die Möglichkeiten der wahlfreien individuellen Anpassung eines derartigen Gerätes unter Zugrundelegung des Verfahrens ist beliebig fortsetzbar. Entscheidend ist jedoch, daß das Gerät sich durch die drei Identifikationsmerkmale identifiziert. Dies kann in Form einer Schlüsselnummer erfolgen oder durch direkte Angabe, je nach Speicherung der Informationen. Es ist aber auch eine individuelle Anpassung z.B. dann möglich, wenn die Speicherkapazität des Gerätes verändert wird. Dies gilt für die Speicherkapazität des Kommunikationsprozessors, eines Zentralprozessors oder gleichwertiger anderer Prozessoren des Gerätes. Eine Änderung ist dann durch individuelle Änderung der Ureingabe der Identifikationsmerkmale möglich. Zu diesem Zweck ist die jeweilige Basisidentifikation in einem EEPROM abgelegt, wodurch eine Änderung der identifikationsmerkmale ermöglicht wird.

Vorteilhafte Verfahrensschritte in Bezug auf die unterschiedliche Ausgestaltung der Geräte sind in den Unteransprüchen angegeben.

Selbstverständlich kann die Programmidentfikationsübersichtsseite entweder in der angesprochenen Programmquelle oder im Gerät selbst abgelegt sein. Es empfiehlt sich jedoch zur Aktualisierung des Softwarestandes, die Übersichtsseite der Programmquelle zuzuordnen, um sie nach der Aufrufprozedur auf dem Bildschirm des zu aktivierenden Gerätes anzuzeigen. Die Aufrufprozedur beim Einschalten des Gerätes bei Erstinbetriebnahme oder beim Wechsel des bestimmungsgemäßen Einsatzes kann selbstverständlich voll automatisch erfolgen, vorausgesetzt die Verbindung zu einem herkömmlichen Telefonnetz oder einem ISDN-S-Netz ist aufgebaut. So ist es z.B. möglich, über die Bildschirmtextzentrale sich an einen externen Rechner eines Programmanbieters anzukoppeln, der an Hand der übertragenen Informationen angibt, welche Programmpakete für ein Gerät mit den angegebenen Identifikationsmerkmalen bereitgestellt werden können. Der Benutzer des Gerätes hat dann die freie Auswahlmöglichkeit zwischen den Programmen, die nach Überprüfung der bereitgestellten Kapazität der einzelnen Prozessoren übertragen und in die Speicher eingeschrieben werden. Selbstverständlich ist es zur zusätzlichen Datensicherung möglich, die empfangenen Programmpakete in einem Massenspeicher abzulegen, um sie zur Neuaktivierung des Gerätes wieder einzulesen. Bei Verwendung von EEPROMS ist eine unmittelbare Einspeicherung in die so ausgelegten Programmspeicher möglich. Ebenso können - unter Einsatz von Batteriepuffern - die Daten in Programmspeichern auf der Basis von RAMS abgelegt werden.

Für die Herstellung der Kommunikation über den Kommunikationsprozessor (Bildschirmtextdecoder) muß selbstverständlich eine Basisbetriebssoftware in diesem abgelegt sein, um z.B. den Verbindungsaufbau über die Kommunikationsschnittstelle zu der Programmquelle zu ermöglichen.

Die Identifikationskategorien beinhalten aus allen drei Teilen Softwaremerkmale, dadurch soll eine Aufwärtskompatibilität der unterschiedlichen Geräte erreicht werden. Weist ein Gerät z.B. in der Basisversion keine Druckerschnittstelle auf, so weist dies die Identifikationsseite aus; weist hingegen eine Gerätevariante des gleichen Basisgerätes eine Druckerschnittstelle auf, so wird diese Funktionalität in der gerätespezifischen Identifikationsseite angegeben. Die Programmauswahlseite zeigt dem Benutzer an, welche Druckertreibersoftwareprogramme für das Gerät zur Verfügung stehen, oder sendet eine Frageseite, in welcher der Druckertyp einzugeben ist, der an das Gerät angeschlossen werden soll.

Ist an das Gerät z.B. eine ASCII-Tastatur oder eine DIN-Tastatur anschließbar, so kann die Schnittstelle ebenfalls auf dem beschriebenen Weg aktiviert werden. Dies gilt auch für Spezialtastaturen unter Beachtung der nationalen Zeichensätze, wie chinesische Zeichen.

Eine Unterstützungssoftware zum Betreiben eines Bildplattenspielers oder eines Bildaufzeichnungsgerätes ist ebenfalls möglich, wenn die entsprechende Funktionalität des Gerätes in der Identifikationsseite mit aufgenommen ist und das Gerät über eine solche Schnittstelle verfügt. Selbstverständlich können entsprechende Schnittstellen auch nachträglich eingesetzt werden, wenn das Gerätesystem dieses zuläßt. In diesem Fall muß die Identifikationsseite mit aufgenommen werden, wenn das Gerät über eine solche Schnittstelle verfügt. Werden entsprechende Schnittstellen nachträglich eingesetzt, wenn das Gerätesystem dieses zuläßt, so muß die Identifikationsseite bezüglich der Kategorie "Schnittstelle" entsprechend geändert werden.

Das Verfahren läßt darüber hinaus ein individuell angepaßtes Bedienerführungssystem zu, wonach eine menuegesteuerte Benutzerführung für die einzelnen Funktionen vorgesehen ist, das in der jeweiligen Landessprache aktivierbar ist. Die entsprechenden Benutzerprogramme werden von der Programmquelle ebenfalls bereitgestellt. Die Benutzerprogramme sind den jeweiligen Schnittstellen und Funktionen zugeordnet und in dem Programmspeicher abgelegt, auf den der jeweilige Prozessor zur Abarbeitung dieser Programme zugreift.

Bei einem System mit einem zentralen Prozessor und Subprozessoren, wobei der Kommunikationsprozessor des Bildschirmtextdecoders ein Subprozessor ist, erfolgt die Abarbeitung der Programme über die Zentralsteuereinheit und nur untergeordneter Programme durch den jeweiligen Subprozessor. Die Zuordnung der Programmpakete erfolgt durch das Betriebsprogramm des zentralen Prozessors. Werden hingegen gleichrangige Prozessoren in dem Endgerät eingesetzt, wie sie im Anspruch 6 angegeben sind, so müssen die Betriebsabläufe und die Kommunikation zwischen den Prozesoren gesteuert ablaufen, um z.B. ein Rechenprogramm, das gegenwärtig von einem Prozessor abgearbeitet wird, nicht zu unterbrechen. Die entsprechenden Maßnahmen sind im Anspruch 6 angegeben. Die Kommunikation der Prozessoren untereinander kann aber auch nach einem Verfahren stattfinden, wie es in der DE-OS 36 05 421 angegeben ist. Der Mikroprozessor des BTX-Decoders ist in jedem Fall aber der Kommunikationsprozessor, über den die Softwarepakete abgerufen, empfangen und an die Speicher direkt oder indirekt über weitere Prozessoren abgegeben werden.

Beim Wechsel des Einsatzes eines Gerätes brauchen selbstverständlich nicht alle Programmteile ausgetauscht zu werden, wenn das Angebot der Programmquelle so gestaltet ist, daß einzelne Programmpakete, z.B. die Anpassung an einen bestimmten Drucker oder ein bestimmtes Bildplattengerät oder an eine bestimmte Tastatur, austauschbar angeboten werden. Das entsprechend adressierte Programmpaket, das in dem Programmspeicher abgelegt ist, wird dabei durch das neu angebotene Programmpaket überschrieben.

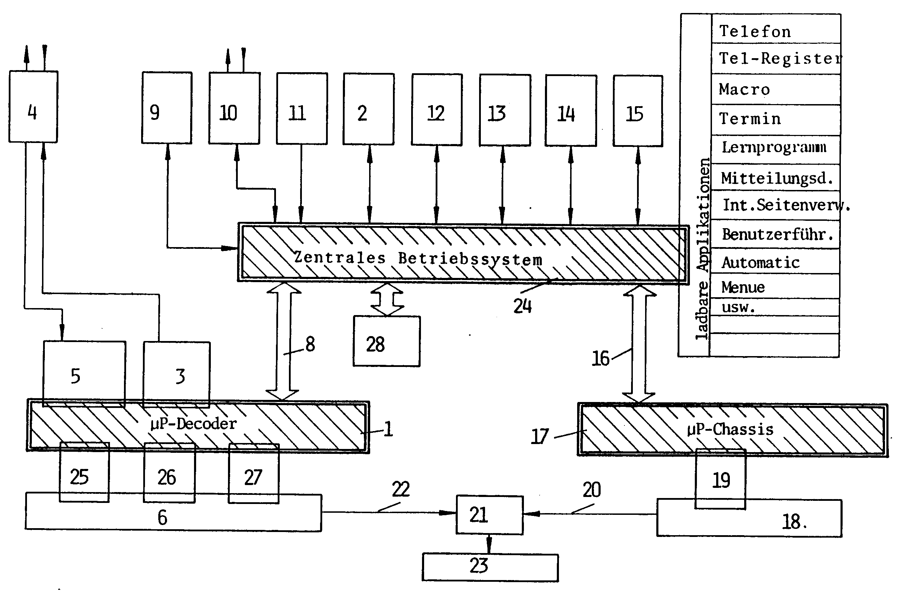

Das erfindungsgemäße Verfahren findet z.B. Anwendung in einem in der Zeichnung dargestellten Gerätekonzept für ein Bildschirmtext-Fernsehkombinationsgerät mit einem zentralen Betriebssystem mit einem Prozessor und weiteren Subprozessoren, wobei der BTX-Decoder einen Mikroprozessor als Kommunikationsprozessor aufweist.

Der Bildschirmtextdecoder weist einen Mikroprozessor 1 auf, der als Kommunikationsprozessor für das Verfahren nach der Erfindung eingesetzt ist. Bei der Erstinbetriebnahme des Gerätes oder beim Wechsel des Diensteinsatzes des Gerätes wird durch Betätigung einer entsprechenden Taste auf der Tastatur 2 über das zentrale Betriebssystem 24 der Kommunikationsprozessor 1 angesteuert und bewirkt über seinen Signalausgang 3 eine Ansteuerung des Modems 4, über das der Anschluß an die nichtdargestellte externe Programmquelle erfolgt. Die Kommunikation zwischen dem Kommunikationsprozessor 1 und der externen Programmquelle erfolgt über das Modem 4, wobei die Signale von der Programmquelle über den Eingang 5 von dem Prozessor empfangen und ausgewertet werden. Der Kommunikationsprozessor 1 bzw. der Mikroprozessor des Decoders ist mit dem CRT-Controller 6 verbunden. Zwischen ihnen werden die symbolisch dargestellten Bildschirmtextseiten 25 sowie die Zeichensätze 26 und die Daten für die Fernsehtextdarstellungen 27 abgearbeitet und zur Anzeige gebracht, wenn der Prozessor für diese bestimmten Dienste aktiviert ist.

Die Kommunikation zwischen dem zentralen Betriebssystem 24 und dem Kommunikationsprozessor 1 erfolgt über den bidirektionalen Bus 8. Über das zentrale Betriebssystem sind folgende Baugruppen ansteuerbar: VLP-Schnittstelle 9 (eine Bildplattenschnittstelle), ein Wahlhilfemodul für ein Telefon 10, ein Fernbedienungssystem 11, die angesprochene Tastatur 2, eine VTR-Schnittstelle (Bildbandaufzeichnungsschnittstelle) 12, eine Auxiliary-Schnittstelle 13 (z.B. eine V.24 Schnittstelle), eine Drucker-Schnittstelle 14 und eine Massenspeicherschnittstelle 15, z.B. Disk-Laufwerk-Schnittstelle.

Weiterhin kommuniziert das zentrale Betriebssystem 24 mit dem als Subprozessor eingesetzten Mikroprozessor 17 des Chassis bzw. mit den einzelnen Prozessoren des Chassis, die nicht näher dargestellt sind. Hierfür ist der bidirektionale Bus 16 vorgesehen, der die entsprechenden Schnittstellen zwischen dem zentralen Betriebssystem 24 und jeder internen Kommunikationsschnittstelle des Mikroprozessors 17 des Chassis verbindet. Der Mikroprozessor 17 des Chassis dient zur Steuerung der einzelnen Subprozessoren und Bausteine des TV-Chassis 18. Die Verknüpfungsebene ist durch den Block 19 gekennzeichnet. Die ladbaren Applikationen und Softwareprogramme werden in dem EEPROM oder batteriegepufferten Speicher 28 über den Prozessor des zentralen Betriebssystems 24 gespeichert.

Der Ausgang des TV-Chassis führt über die Leitung 20 zum Display-Prozessor 21, der das Bildrohr oder ein Flachdisplay ansteuert. Der Display-Prozessor 21 steht darüber hinaus über eine andere Leitung 22 mit dem CRT-Controller 6 in Verbindung, so daß die Textinformationen direkt als RGB-Informationen an dem Display-Prozessor anliegen. Die Darstellung erfolgt, wie bereits ausgeführt, durch den Monitor 23, der ein Flachdisplay oder ein herkömmliches Röhrendisplay sein kann.

Ein so ausgestattetes Gerät kann als nicht funktionsfähige Einheit bis zum Einsatzort gelangen und wird dort durch Anwahl einer Programmquelle und Auswahl der angebotenen Programme aktiviert. Hierzu dient das erfindungsgemäß vorgesehene Verfahren. Die Programmpakete werden in den nicht näher dargestellten Programmspeichern des Bildschirmtextdecoders und/oder im Speicher 28 des zentralen Betriebssystems 24 und/oder des Mikroprozessors 17 des Chassis 18 gespeichert. Es können hierfür RAMs verwendet werden, die zur Datensicherung an eine Spannungsquelle angeschlossen sind, auch dann, wenn das Gerät abgeschaltet ist. Es können aber auch EEPROMs eingesetzt werden. Zur Datensicherung kann das Programm auch über die Massenspeicherschnittstelle 15 gesichert werden.

Die Programme und deren Auswahl richten sich nach der Kapazität der zur Verfügung stehenden Programmspeicher, die über das zentrale Betriebssystem oder den Kommunikationsprozessor des Bildschirmtextdecoders direkt angesprochen werden. Durch die Identifikation wird die Zuordnung in den entsprechenden Speichern mitgesteuert. Die hierfür benötigten Steuerfunktionen werden mit dem Programm von der Programmquelle übertragen und bewirken den Prozeßablauf innerhalb des Gerätes. So ist es möglich, alle Schnittstellen und Bausteine, wie sie oberhalb des zentralen Betriebssystems angegeben sind, zu aktivieren und deren Steuerung durch eine Benutzungsführung zu unterstützen. Ein Beispiel der ladbaren Applikationen ist in der rechten Bildhälfte dargestellt. So können Programmpakete für Telefon, z.B. Wahlhilfemodul, Telefonregister, Makro-Termin-Register, Programme, Mitteilungsdienste, interne Seitenverwaltung, Benutzerführung, mehrsprachiger Automatikbetrieb für Anwahlprozeduren, Menuesteuerungen, Taschenrechnerfunktionen usw., geladen werden. Im Wege der Kommunikation mit der angeschlossenen Programmquelle werden die entsprechenden Datenprogrammpakete ausgelesen und eingeschrieben. Anstelle der Übernahme fernladbarer Software-Programme aus der externen Programmquelle können diese auch von einem externen Datenspeichergerät, das über den Auxiliary-Anschluß 13 erreichbar ist, eingelesen werden.

Es ist ersichtlich, daß bei Anwendung der Erfindung auf ein solches Gerät die mannigfaltigsten Darstellungs- und Nutzungsmöglichkeiten gegeben sind und das Gerät hierfür erst am Ort des Einsatzes aktiviert zu werden braucht.

## Patentansprüche

1. Verfahren zur bestimmungsgemäßen Programmierung eines Bildschirmtextgerätes am Ort des Einsatzes, mit einem mikroprozessorgesteuerten Bildschirmtextdecoder, mit einem Programmspeicher, in welchem mindestens die Basisbetriebsprogramme zur Abarbeitung und Darstellung der-empfangenen Bildschirmtext-Signale sowie zur Bedienung der Kommunikationsschnittstelle zum Obertragungsnetz oder zu einem extern anschließbaren Datenspeichergerät fest gespeichert sind, und einem zweiten ladbaren Programmspeicher und einem Arbeitsspeicher, in welchem die empfangenen Bildschirmtext-Signale seitenweise ablegbar sind, wobei der Mikroprozessor nach Aufruf des entsprechenden Programms aus den Programmspeichern durch Eingabe von Steuerbefehlen über die Eingabetastatur die im Arbeitsspeicher gespeicherten Signale aufbereitet ggf. umsetzt, umrechnet und ausgibt, **gekennzeichnet durch** folgende Verfahrensschritte:
a) bei der Erstinbetriebnahme oder beim Wechsel des bestimmungsgemäßen Einsatzes des Gerätes werden durch Eingabe eines Installationsbefehles eine oder mehrere in dem Programmspeicher (ROM) zur Geräteidentifikation abgelegten Bildschirmtextseiten aufgerufen und über die freigeschaltete Kommunikationsschnittstelle (4) an den Rechner einer abrufbaren Programmquelle, wie einen externen Bildschirmtextrechner oder ein angeschlossenes Datenspeichergerät, nach Herstellung der Verbindung abgesendet, wobei der Mikroprozessor des Bildschirmtextdecoders der Kommunikationsprozessor (1) des Gerätes ist;
b) die Bildschirmtextseiten zur Geräteidentifikation enthalten verschlüsselt oder unverschlüsselt folgende Identifikationsmerkmale:
I. Speicherkapazität des zweiten oder weiteren Programmspeichers
II. interne und externe Schnittstellen
III. Funktionalitätsmerkmale des Gerätes;
c) nach dem Verbindungsaufbau mit der externen Programmquelle und dem Absenden der Geräteidentifikationsseiten werden von der externen Programmquelle kommende Bildschirmtextseiten (25) empfangen und auf dem Bildschirm dargestellt, die eine Obersicht über die für das Gerät verfügbaren Arbeitsprogramme in der Programmquelle enthalten;
d) aus den aufgelisteten Arbeitsprogrammen sind einzelne oder mehrere Programme kombiniert auswählbar, z.B. mittels über Cursor geführte Auswahlsteuerung oder Einschreiben der Programme oder Programmkenn-Nummern in eine Abrufzeile in einer Bildschirmtextanforderungsseite, wobei während der Auswahl oder nach derselben die den einzelnen Programmen zugeordneten Anforderungsbefehle an die Programmquelle abgesandt werden;
e) der Rechner der Programmquelle überprüft anhand der Geräteidentifikation, ob die verfügbare Speicherkapazität des ladbaren Programmspeichers (28) ausreicht, um die angeforderten Programme laden zu können, und sendet bei ausreichender Speicherkapazität die Programme zur Einspeicherung an den bzw. die ladbaren zweiten Programmspeicher (28) ab; im Fall, daß keine ausreichende Speicherkapazität zur Verfügung steht, wird eine Informationsseite übertragen, die anzeigt, daß Teile der Programme nicht übernehmbar sind;
f) nach Wiederholung der Programmabrufprozedur und Auswahl der Programmpakete bis zur Bestätigung, daß die Programmpakete die zur Verfügung stehende Speicherkapazität des ladbaren Programmspeichers (28) nicht überschreiten, werden die ausgewählten Programme in den ladbaren Programmspeicher (28) geladen und die Verbindung über die Kommunikationsschnittstelle (4) automatisch unterbrochen, so daß das Gerät bestimmungsgemäß einsetzbar ist.

2. Verfahren nach Anspruch 1 in Verbindung mit einem Bildschirmtextdecoder mit einem ladbaren Massenspeicher (28), dadurch gekennzeichnet, daß die abgerufenen Programmpakete in diesen gespeichert werden und die einzelnen Programmpakete in die ladbaren Programmspeicher (28) der Prozessoren von dem Mikroprozessor des Bildschirmtextdecoders eingeschrieben werden, nachdem der Kommunikationsprozessor (1) die verfügbare Speicherkapazität des Programmspeichers (28), in welchen das abgerufene Programmpaket übernommen werden soll, mit der benötigten Speicherkapazität überprüft hat.

3. Verfahren nach Anspruch 1 oder 2, dadurch gekennzeichnet, daß in der Programminformationsübersichtsseite die benötigten Speicherkapazitäten zum Abspeichern der einzelnen abrufbaren Programmpakete angegeben sind.

4. Verfahren nach einem der vorhergehenden Ansprüche, dadurch gekennzeichnet, daß über den Kommunikationsprozessor (1) die empfangenen Programmpakete in die ladbaren Programmspeicher (28) der im Gerät vorhandenen Mikroprozessoren (24, 17) über einen bidirektionalen Bus (8, 16) zwischen den Mikroprozessoren adressiert geladen werden.

5. Verfahren nach Anspruch 4, dadurch gekennzeichnet, daß einer der weiteren Prozessoren eine zentrale Betriebssteuereinheit (24) bildet und die Programmpakete in den diesem Prozessor zugeordneten ladbaren Programmspeicher (28) eingeschrieben werden und die übrigen Prozessoren (17, 1) als Subprozessoren arbeiten, die über den bidirektionalen Bus (8, 16) von der Zentralsteuereinheit in an sich bekannter Weise aktiviert und für Rechenprozesse freigegeben werden und Zugriff auf den zentralen ladbaren Programmspeicher (28) über die Zentralsteuereinheit (24) haben.

6. Verfahren nach Anspruch 5, dadurch gekennzeichnet, daß alle Prozessoren (1, 24, 17) des Gerätes gleichberechtigt sind und die Kommunikation zwischen den Prozessoren (1, 24, 17) von jedem an der Kommunikation teilnehmenden Prozessor in Abhängigkeit von dem eigenen Betriebszustand unterbrochen und wieder freigeschaltet wird, wenn ein Rechenprogramm in dem jeweiligen Prozessor (1, 24, 17) abgelaufen ist oder auf einen anderen Prozessor zugegriffen werden soll oder Daten von einem anderen Prozessor unabhängig vom durchgeführten Rechenprozeß in den Arbeitsspeicher (28) übernommen werden, wobei bei unterschiedlichen Verarbeitungsgeschwindigkeiten der Prozessoren (1, 24, 17) durch einen Quittierungsbetrieb sichergestellt ist, daß laufende Routinen nicht unterbrochen werden und kein geschwindigkeitsbedingter Datenverlust auftritt.

## Claims

1. Method for the specification-consistent programming of a teletext receiver at the place of use with a microprocessor-controlled teletext decoder, with a program storage device, in which at least the basic operating programs for the processing and representation of the received teletext signals as well as for the operation of the communications interface to the transmission network or to an externally connectable data storage device are fixedly stored, and a second loadable storage device and an operating storage device in which the received teletext signals are filable page by page, wherein the microprocessor - after call up of the appropriate program from the program storage device by input of control commands by way of the input keyboard - prepares the signals stored in the operating storage device and in a given case translates, recalculates and issues them, characterised by the following method steps:
a) for the commissioning of or for a change in the specification-consistent use of the receiver, one or more teletext pages filed for receiver identification in the program storage device (ROM) are called up by input of an installation command and sent off after establishment of the connection by way of the switched-free communications interface (4) to the computer of a recallable program source, such as an external teletext computer or a connected data storage device, wherein the microprocessor of the teletext decoder is the communications processor (1) of the receiver;
b) the teletext pages for receiver identification contain, coded or uncoded, the following identification features:
I. storage capacity of the second or further program storage device,
II. internal and external interfaces and
III. functionality of the receiver;
c) after the establishment of the connection with the external program source and after the sending-off of the receiver identification pages, teletext pages (25) coming from the external program source are received and reproduced on the picture screen, which (pages) contain a synopsis of the operating programs in the program source, which are available for the receiver,
d) individual programs or several programs in combination are selectable from the listed operating programs, for example by means of selection control guided by cursor or by inscription of the programs or program identification numbers into a recall line in a teletext request page, for which the request commands associated with the individual programs are sent off to the program source during or after the selection;
e) the computer of the program source checks with the aid of the receiver identification whether the available storage capacity of the loadable program storage device (28) suffices to be able to load the requested programs and, in the case of sufficient storage capacity, send the programs for entry into storage to the or each second loadable program storage device (28); in case no sufficient storage capacity is available, an information page is transmitted, which indicates that parts of the programs cannot be taken over;
f) after repetition of the program recall procedure and selection of the program packets and until confirmation that the program packets do not exceed the available storage capacity of the loadable program storage device (28), the selected programs are loaded into the loadable program storage device (28) and the connection by way of the communications interface (4) is interrupted automatically so that the receiver is usable as intended.

2. Method according to claim 1 in conjunction with a teletext decoder with a loadable mass storage device (28), characterised thereby, that the recalled program packets are stored in this and the individual program packets are written into the loadable program storage devices (28) of the processors by the microprocessor of the teletext decoder after the communications processor (1) has checked the available storage capacity of the program storage device (28), into which the recalled program packet is to be taken over, against the required storage capacity.

3. Method according to claim 1 or 2, characterised thereby, that the required storage capacities for the filing of the individual recallable program packets are indicated in the program information synopsis page.

4. Method according to one of the preceding claims, characterised thereby, that the received program packets are loaded by way of the communications processor (1) into the loadable program storage devices (28) of the microprocessors (24, 17), which are present in the receiver, by way of a bidirectional bus (8, 16) between the microprocessors.

5. Method according to claim 4, characterised thereby, that one of the further processors forms a central operation control unit (24) and the program packets are written into the loadable program storage devices (28) associated with this processor and the remaining processors operate as subprocessors which are activated in an in itself known manner from the central control unit by way of the bidirectional bus (8, 16) and released for computing processes and have access to the central loadable program storage device (28) by way of the central control unit (24).

6. Method according to claim 5, characterised thereby, that all processors (1, 24, 17) of the receiver have equal priority and the communication between the processors (1, 24, 17) is interrupted by each processor, which participates in the communication, independence on its own operational state and again switched free when a computing program in the respective processor (1, 24, 17) has run down or access is to be made to another processor or data from another processor are taken over into the operating storage device (28) independently of the performed computing process, wherein it is made certain by an acknowledgement operation in the case of different processing speeds of the processors (1, 24, 17) that running routines are not interrupted and no data loss due to speed arises.

## Revendications

1. Procédé de programmation d'un appareil vidéotexte conformément à son application sur le lieu d'utilisation, comportant un décodeur vidéotexte commandé par microprocesseur, une mémoire de programmes, dans laquelle sont enregistrés au moins les programmes d'exploitation de base pour l'exécution et l'affichage des signaux vidéotexte reçus et pour la commande de l'interface de communication vers le réseau de transmission ou une mémoire de données externe pouvant être connectée, et une deuxième mémoire de programmes pouvant être chargée et une mémoire vive, dans laquelle peuvent être conservés par page les signaux vidéotexte reçus, étant précisé que le microprocesseur, après avoir appelé le programme correspondant dans les mémoires de programmes en entrant des ordres de commande par le clavier d'entrée, traite, le cas échéant transpose, convertit et édite les signaux enregistrés dans la mémoire vive, procédé caractérisé par les phases de procédé suivantes :
a) lors de la première mise en service ou lorsque l'utilisation de l'appareil conformément à son application est modifiée, une ou plusieurs pages vidéotexte enregistrées dans la mémoire de programme (ROM) pour l'identification de l'appareil, sont appelées en entrant un ordre d'installation, et envoyées après établissement de la communication, via l'interface de communication (4) déconnectée, à l'ordinateur d'une source de programme que l'on peut appeler, par exemple un ordinateur vidéotexte externe ou une mémoire de données externe connectée, étant précisé que le microprocesseur du décodeur vidéotexte est le processeur de communication (1) de l'appareil ;
b) les pages vidéotexte pour l'identification de l'appareil comportent sous forme de code ou non des caractéristiques d'identification suivantes :
I. capacité de mémoire de la deuxième mémoire de programme ou des suivantes
II. interfaces internes et externes
III. caractéristiques fonctionnelles de l'appareil ;
c) après avoir établi la communication avec la source de programmes externe et envoyé les pages d'identification de l'appareil, sont reçues et affichées sur l'écran les pages vidéotexte (25) venant de la source de programmes externe, qui comportent une liste des programmes de travail disponibles pour l'appareil dans la source de programmes ;
d) parmi les programmes de travail figurant dans la liste, on peut choisir différents programmes ou une combinaison de plusieurs programmes, par exemple par l'intermédiaire d'une sélection commandée par curseur ou en inscrivant les programmes ou les codes de programmes dans une ligne de demande contenue dans une page de demande vidéotexte, étant précisé que pendant la sélection ou après celle-ci, les instructions de demande attribuées aux différents programmes sont envoyées à la source de programmes ;
e) l'ordinateur de la source de programme vérifie au moyen de l'identification de l'appareil, si la capacité de mémoire disponible de la mémoire de programme (28) pouvant être chargée suffit pour charger les programmes demandés, et envoie les programmes, si la capacité de mémoire est suffisante, dans la ou les deuxièmes mémoires de programmes pouvant être chargées, pour qu'ils soient mis en mémoire; au cas où la capacité de mémoire serait insuffisante, une page d'information est transmise, qui indique que certaines parties des programmes ne peuvent pas être chargées ;
f) après répétition de la procédure d'appel de programmes et sélection des paquets de programmes jusqu'à la confirmation que les paquets de programmes ne dépassent pas la capacité de mémoire disponible de la mémoire de programmes (28) pouvant être chargée, les programmes sélectionnés sont chargés dans la mémoire de programme (28) et la connexion via l'interface de communication (4) est automatiquement interrompue, si bien que l'appareil est utilisable conformément à son application.

2. Procédé selon la revendication 1 en liaison avec un décodeur vidéotexte comportant une mémoire de masse pouvant être chargée (28), caractérisé en ce que les paquets de programmes appelés sont stockés dans celle-ci et que les différents paquets de programmes sont enregistrés dans les mémoires de programmes (28) pouvant être chargées des processeurs, par le microprocesseur du décodeur vidéotexte, après que le processeur de communication (1) ait vérifié la capacité de mémoire disponible de la mémoire de programmes (28), dans laquelle doit être introduit le paquet de programmes appelé, et la capacité de mémoire requise.

3. Procédé selon la revendication 1 ou 2, caractérisé en ce que dans la page synoptique contenant des informations sur les programmes, sont indiquées les capacités de mémoire nécessaires à enregistrer des différents paquets de programmes pouvant être appelés.

4. Procédé selon l'une des revendications précédentes, caractérisé en ce que, via le processeur de communication (1) sont chargés adressés entre les microprocesseurs, les paquets de programmes reçus dans les mémoires de programmes pouvant être chargées (28) des microprocesseurs (24, 17) équipant l'appareil, par l'intermédiaire d'un bus bidirectionnel (8, 16).

5. Procédé selon la revendication 4, caractérisé en ce qu'un des processeurs suivants forme une unité de commande d'exploitation centrale (24) et en ce que les paquets de programmes sont chargés dans la mémoire de programmes pouvant être chargée (28) attribuée à ce processeur et en ce que les autres processeurs (17, 1) travaillent comme sous-processeurs qui sont activés de façon en principe connue via le bus bidirectionnel (8, 16) par l'unité de commande centrale et libérés pour des processus de calcul, et qui peuvent accéder à la mémoire de programme centrale pouvant être chargée (28) via l'unité de commande centrale (24).

6. Procédé selon la revendication 5, caractérisé en ce que tous les processeurs (1, 24, 17) de l'appareil sont égaux et que la communication entre les processeurs (1, 24, 17) est interrompue par chaque processeur participant à la communication en fonction de l'état de fonctionnement propre et à nouveau déconnectée lorsqu'un programme de calcul dans le processeur respectif (1, 24, 17) est achevé ou lorsqu'on veut accéder à un autre processeur ou lorsque des données sont introduites dans la mémoire vive (28) par un autre processeur indépendamment du processus de calcul, étant précisé que lorsque les processeurs (1, 24, 17) travaillent à des vitesses de traitement différentes, un système d'accusé de réception assure que les programmes en cours ne sont pas interrompus et qu'une perte de données due à la vitesse est exclue.
